Europäisches Patentamt

European Patent Office

Office européen des brevets

(19)

(11) Veröffentlichungsnummer: **0 387 928**

**A2**

# (12) EUROPÄISCHE PATENTANMELDUNG

(21) Anmeldenummer: **90200089.2**

(22) Anmeldetag: **13.01.90**

(51) Int. Cl.5: **C10L 10/00**

(30) Priorität: **11.03.89 DE 3908019**

(43) Veröffentlichungstag der Anmeldung:
**19.09.90 Patentblatt 90/38**

(84) Benannte Vertragsstaaten:
**AT DE ES FR GB IT SE**

(71) Anmelder: **METALLGESELLSCHAFT
Aktiengesellschaft
Reuterweg 14
D-6000 Frankfurt am Main(DE)**

(72) Erfinder: **Bandel, Gebhard, Dr. Chem.
Kirchgasse 3
D-6000 Frankfurt/Main 60(DE)**
Erfinder: **Dadazynski, Rolf-Peter
Im Seifen 26
D-6395 Weilrod(DE)**
Erfinder: **Staab, Werner Peter, Dipl.-Ing.
Brunnenstrasse 24 d
D-6365 Rosbach 2(DE)**

(54) **Entschwefelungsmittel und Verfahren zu seiner Herstellung.**

(57) Es wird ein Entschwefelungsmittel beschrieben, das aus 3 bis 10 Gew.-% Braunkohlenasche und Rest Calciumhydroxid besteht sowie in pelletierter Form verwendet wird, wobei die Pellets einen Durchmesser von 0,2 bis 3 mm, vorzugsweise 0,5 bis 1 mm, aufweisen. Ferner wird ein Verfahren zur Herstellung dieses Entschwefelungsmittels beschrieben.

EP 0 387 928 A2

## Entschwefelungsmittel und Verfahren zu seiner Herstellung

Die Erfindung betrifft ein Entschwefelungsmittel, das zur Entfernung der Oxide des Schwefels aus Verbrennungsabgasen verwendet wird. Die Erfindung bezieht sich ferner auf ein Verfahren zur Herstellung des Entschwefelungsmittels und auf die Verwendung des Entschwefelungsmittels.

Fossile Brennstoffe (Steinkohle, Braunkohle, Torf, Erdöl) enthalten Schwefelverbindungen in unterschiedlicher Menge, aus denen bei der Verbrennung der Brennstoffe vorzugsweise $SO_2$ und in geringer Menge $SO_3$ gebildet wird. Die bei der Verbrennung fossiler Brennstoffe anfallenden Abgase enthalten daher bis zu 10 000 mg $SO_2$/$Nm^3$, wobei der durchschnittliche $SO_2$-Gehalt der Verbrennungsabgase in der Bundesrepublik Deutschland zwischen 1 000 und 2 000 mg $SO_2$/$Nm^3$ liegen dürfte. Da die Oxide des Schwefels als Umweltgift wirken, wenn sie in die Atmosphäre gelangen, ist es erforderlich, die Oxide des Schwefels aus den Verbrennungsabgasen möglichst weitgehend zu entfernen, zumal zum Zweck der Energiegewinnung ganz erhebliche Mengen an fossilen Brennstoffen verbrannt werden.

Es ist bekannt, daß Verbrennungsabgase mit festen Entschwefelungsmitteln in Berührung gebracht werden, wobei die Oxide des Schwefels unter Bildung von festen Sulfaten und Sulfiten mit dem Entschwefelungsmittel reagieren. Als feste Entschwefelungsmittel werden insbesondere Calciumoxid, Calciumhydroxid und Calciumkarbonat verwendet, die mit $SO_2$ und $SO_3$ bei erhöhter Temperatur in Gegenwart von Sauerstoff vorzugsweise zu Calciumsulfat reagieren. In Abhängigkeit von den Reaktionsbedingungen wird allerdings auch durch eine unerwünschte Nebenreaktion immer mehr oder weniger Calciumsulfit gebildet. Die Reaktivität der Entschwefelungsmittel wird insbesondere bestimmt durch ihre Teilchengröße, ihre Kristallstruktur und ihre mechanische Festigkeit. Während einige Entschwefelungsmittel direkt in den Verbrennungsraum eingebracht werden (z. B. Kalkstein), werden andere Entschwefelungsmittel in einer der Verbrennung nachgeschalteten Feststoff-Gas-Reaktion mit den Schwefeloxiden der Verbrennungsabgase zur Reaktion gebracht. Auch die in der Brennstoffasche enthaltenen CaO-Anteile reagieren mit den in den Abgasen enthaltenen Schwefeloxiden.

Die Dosierung der festen Entschwefelungsmittel, welche die Oxide des Schwefels in einer Gas-Feststoff-Reaktion binden, ist problematisch, da die Entschwefelungsmittel wegen der erforderlichen Reaktivität häufig in fein verteilter Form angewendet werden müssen, was aber mit einem nachteiligen Fließ- und Agglomerationsverhalten verbunden ist. Es hat daher nicht an Versuchen gefehlt, die Entschwefelungsmittel in stückiger oder pelletierter Form einzusetzen, womit aber in vielen Fällen eine Herabsetzung der Reaktivität verbunden ist, denn nicht selten muß das wirksame Agens des Entschwefelungsmittels in dreifachem stöchiometrischem Überschuß, bezogen auf den Schwefeloxidgehalt der Abgase, eingesetzt werden.

Der Erfindung liegt daher die Aufgabe zugrunde, ein Entschwefelungsmittel bereitzustellen, das bei guter Reaktivität in stückiger Form anwendbar ist und eine hohe mechanische Festigkeit besitzt. Ferner liegt der Erfindung die Aufgabe zugrunde, ein Verfahren zur Herstellung des Entschwefelungsmittels zu schaffen.

Die der Erfindung zugrundeliegende Aufgabe wird dadurch gelöst, daß das Entschwefelungsmittel aus 3 bis 10 Gew.-% Braunkohlenasche und Rest Calciumhydroxid besteht sowie in pelletierter Form verwendet wird, wobei die Pellets einen Durchmesser von 0,2 bis 3 mm, vorzugsweise 0,5 bis 1 mm aufweisen. In überraschender Weise hat sich gezeigt, daß Braunkohlenasche, die durch folgende Zusammensetzung charakterisiert ist: 5 bis 15 Gew.-% Siliciumdioxid, 4 bis 20 Gew.-% Aluminiumoxid, 20 bis 50 Gew.-% Calciumoxid (gesamt), 0,5 bis 5 Gew.-% Magneisumoxid, 7 bis 20 Gew.-% Sulfat, berechnet als $SO_3$, und 3 bis 15 Gew.-% freies Calciumoxid, dann die Pelletierung von Calciumhydroxid ermöglicht, wenn sie in Calciumhydroxid-Pellets in einer Menge von 3 bis 10 Gew.-% enthalten ist. Die Pellets haben bei hoher Reaktivität einen Durchmesser von 0,2 bis 3 mm und können wegen ihrer guten mechanischen Festigkeit ohne weiteres in den Feuerungsraum eingebracht werden, wo ihr Calciumhydroxid-Gehalt zu mehr als 50 % in Calciumsulfat umgewandelt wird, wobei kein Calciumsulfit entsteht. Die Pellets haben bei einer Reaktionstemperatur von 750 bis 950 °C also eine gute Entschwefelungswirkung.

Die der Erfindung zugrundeliegende Aufgabe wird ferner durch ein Verfahren zur Herstellung des Entschwefelungsmittels gelöst, bei dem feinkörniges Calciumhydroxid mit einem Korndurchmesser von kleiner 50 $\mu$m und 3 bis 10 Gew.-% Braunkohlenasche mit einem Korndurchmesser kleiner 50 $\mu$m gemischt werden, bei dem diese Mischung unter Zugabe von 15 bis 40 Gew.-%, vorzugsweise 20 bis 30 Gew.-%, Wasser pelletiert wird und bei dem die Grünpellets bei 20 bis 100 °C während 30 bis 300 min getrocknet werden. Durch das erfindungsgemäße Verfahren wird ein Entschwefelungsmittel in pelletierter Form zur Verfügung gestellt, das bei guter mechanischer Festigkeit eine hohe Reaktivität hat und problemlos dosiert werden kann. Einen eventuellen unterschiedlichen Wassergehalt des zur Herstellung des Entschwefelungsmittels verwendeten Calciumhydroxids wird durch eine Veränderung der zur Pelletierung benötigten Wassermenge ausgeglichen.

Nach der Erfindung hat es sich als besonders vorteilhaft erwiesen, wenn als feinkörniges Calciumhydroxid das bei der Umsetzung von Calciumcarbid und Wasser anfallende Kalkhydrat verwendet wird. Dieses Kalkhydrat, dessen Hauptbestandteil Calciumhydroxid ist, läßt sich wegen seiner Feinkörnigkeit gut mit der Braunkohlenasche vermischen.

Schließlich ist nach der Erfindung vorgesehen, daß das Entschwefelungsmittel zur Entschwefelung von Verbrennungsabgasen verwendet wird, die bei der Verbrennung schwefelhaltiger Brennstoffe in der zirkulierenden Wirbelschicht anfallen, wobei das pelletierte Entschwefelungsmittel mit dem Brennstoff in den Reaktor eingebracht und mit der Asche aus dem Reaktor ausgetragen wird und wobei der im Brennstoff enthaltene Schwefel nahezu quantitativ als Calciumsulfat in dem aus Asche und Entschwefelungsmittel bestehenden Feststoffgemisch vorliegt. Es hat sich in überraschender Weise gezeigt, daß die mechanische Festigkeit der Pellets so groß ist, daß auch unter den Bedingungen der zirkulierenden Wirbelschicht nur ein geringer Abrieb bzw. ein langsamer Zerfall der Pellets eintritt, so daß das Entschwefelungsmittel sowie dessen Reaktionsprodukte nicht in staubförmiger Form, sondern in feinteiliger Form in der Asche vorliegen. Außerdem wird in der zirkulierenden Wirbelschicht, die mit einer Verbrennungstemperatur von 800 bis 950°C gefahren wird, ein hoher Entschwefelungsgrad bei vergleichsweise hoher Reaktivität des Entschwefelungsmittels erreicht, denn mehr als 50 % des im Entschwefelungsmittel vorhandenen Calciumhydroxids werden nahezu quantitativ zu Calciumsulfat umgesetzt. Das entsprechend der Erfindung beschaffene und hergestellte Entschwefelungsmittel entfaltet also dann eine besonders vorteilhafte Wirkung, wenn es zur Entschwefelung der Verbrennungsabgase einer nach dem Prinzip der zirkulierenden Wirbelschicht arbeitenden Großfeuerungsanlage eingesetzt wird.

Der Gegenstand der Erfindung wird nachfolgend anhand eines Ausführungsbeispiels näher erläutert:

Das bei der Carbidtrockenvergasung anfallende Kalkhydrat, das 4 bis 5 Gew.-% Wasser und 95 bis 96 Gew.-% Trockensubstanz enthielt und dessen Trockensubstanz aus 0,5 bis 1 Gew.-% Calciumcarbonat und Rest Calciumhydroxid bestand, wurde mit 5 Gew.-% Braunkohlenflugasche gemischt, mit Wasser befeuchtet und pelletiert. Der mittlere Teilchendurchmesser des Kalkhydrats betrug 25 $\mu$m und der der Braunkohlenasche betrug 20 $\mu$m. Pro Kg Feststoffgemisch wurden 0,25 kg Wasser zugesetzt, wobei der Misch- und Befeuchtungsvorgang in mehreren Stufen durchgeführt wurde. Die Pelletierung lieferte ausreichend feste Grünpellets. Die eingesetzte Braunkohlenflugasche bestand aus 8,5 Gew.-% Siliciumdioxid, 16,3 Gew.-% Aluminiumoxid, 45,3 Gew.-% Calciumoxid und 17,5 Gew.-% $SO_3$. In der Flugasche waren noch 2 Gew.-% unverbrannter Kohlenstoff enthalten und der Gehalt an freiem Calciumoxid lag bei 15,4 Gew.-%. Die Grünpellets wurden auf einem Wanderrost 20 min bei 100°C getrocknet. Der Abrieb der getrockneten Pellets ist sehr gering; er wurde durch 60-minütiges Rütteln von Pellet-Proben auf einem Siebturm überprüft. Bei Versuchen, die in einer nach dem Prinzip der zirkulierenden Wirbelschicht arbeitenden Verbrennungsanlage durchgeführt wurden, zeigte sich, daß die getrockneten Grünpellets nur bis zu einer Teilchengröße zerfallen, die der des umlaufenden Feststoffs (Asche) entspricht. Die Entschwefelungsleistung der getrockneten Grünpellets - also der prozentuale Umsatz von Calciumhydroxid mit Schwefeloxiden in Abhängigkeit von der Zeit - ist höher als die Entschwefelungsleistung von unpelletiertem, aus Calciumcarbid gewonnenem Kalkhydrat. So beträgt der Calciumhydroxid-Umsatz von unpelletiertem Kalkhydrat nach 120 min 40 %, während er bei den erfindungsgemäßen getrockneten Grünpellets 50 % beträgt. Während einer Reaktionszeit von 180 min wurden Umsätze von 55 bzw. 75 % gemessen.

**Ansprüche**

1. Entschwefelungsmittel, dadurch gekennzeichnet, daß es aus 3 bis 10 Gew.-% Braunkohlenasche und Rest Calciumhydroxid besteht sowie in pelletierter Form verwendet wird, wobei die Pellets einen Durchmesser von 0,2 bis 3 mm, vorzugsweise 0,5 bis 1 mm, aufweisen.

2. Verfahren zur Herstellung des Entschwefelungsmittels nach Anspruch 1, dadurch gekennzeichnet, daß feinkörniges Calciumhydroxid mit einem Korndurchmesser von kleiner 50 $\mu$m und 3 bis 10 Gew.-% Braunkohlenasche mit einem Korndurchmesser von kleiner 50 $\mu$m gemischt werden, daß diese Mischung unter Zugabe von 15 bis 40 Gew.-%, vorzugsweise 20 bis 30 Gew.-%, Wasser pelletiert wird und daß die Grünpellets bei 20 bis 100°C während 30 bis 300 min getrocknet werden.

3. Verfahren nach Anspruch 2, dadurch gekennzeichnet, daß als feinkörniges Calciumhydroxid das bei der Umsetzung von Calciumcarbid und Wasser anfallende Kalkhydrat verwendet wird.

4. Verwendung des Entschwefelungsmittels nach Anspruch 1 zur Entschwefelung von Verbrennungsabgasen, die bei der Verbrennung schwefelhaltiger Brennstoffe in der zirkulierenden Wirbelschicht anfallen, wobei das pelletierte Entschwefelungsmittel mit dem Brennstoff in den Reaktor eingebracht und mit der Asche aus dem Reaktor ausgetragen wird und wobei der im Brennstoff enthaltene Schwefel nahezu quantitativ als Calciumsulfat in dem aus Asche und Entschwefelungsmittel bestehenden Feststoffgemisch vorliegt.